# DEMANDE DE BREVET EUROPEEN

(11) **EP 4 464 574 A1**
(43) Date de publication de la demande: **20.11.2024**
(21) Numéro de dépôt: 24176546.0
(22) Date de dépôt: 17.05.2024
(51) Int. Cl.: B62D 1/10, B60R 16/02, B60R 21/20

(54) **MOYEU DE VOLANT FIXE**

(30) Priorité: 17.05.2023 FR 2304947
(71) Demandeur: JP ACT, 78510 Triel-sur-Seine (FR)
(72) Inventeur: JARD, Jean-Pierre, 78510 Triel-sur-Seine (FR)
(74) Mandataire: Tranvouez, Edern Morgan

(57) **Abrégé**

L'invention concerne un moyeu de volant fixe, le moyeu comportant : une platine (20) ; un premier flasque (22) ; et un deuxième flasque (23) ; dans lequel la platine (20) est agencée libre en rotation entre le premier flasque (22) et le deuxième flasque (23). Le premier flasque (22) et le deuxième flasque (23) comportent respectivement une première et une deuxième gorge rectiligne, la platine (20) comprenant un passage périphérique à l'ouverture, et il comprend en outre : un élément en spirale (21) creux pour un passage de câbles qui s'étend entre une première extrémité et une deuxième extrémité, chaque extrémité comportant un ergot (24) enclavé respectivement dans la première gorge et la deuxième gorge de telle manière à rendre le premier flasque (22) et le deuxième flasque (23) solidaire en rotation.

## Description

### Domaine technique de l'invention

La présente invention concerne un moyeu de volant fixe Elle s'applique, en particulier, dans le domaine de l'automobile.

### Technique antérieure

Les moyeux de volant sont des composants essentiels des systèmes de direction des véhicules. Ils sont responsables de la liaison entre le volant du conducteur et les roues du véhicule, permettant ainsi de diriger le véhicule dans la direction souhaitée. Les moyeux de volant sont situés à l'extrémité du volant et sont généralement fixés à une colonne de direction. Ils permettent la rotation du volant tout en transmettant le mouvement de rotation aux roues pour orienter le véhicule.

La rotation empêche d'avoir des commandes au niveau du volant. C'est pourquoi un des objectifs de l'invention est d'avoir un moyeu fixe.

Un tel moyeu fixe permet d'implanter davantage d'équipements électriques tels que des boutons ou des manettes dans le volant, en particulier dans son moyeu central, sans compromettre l'ergonomie de l'ensemble. Cela offre également la possibilité de réorganiser les fonctions actuelles et d'ajouter de nouvelles fonctions dans le volant sans affecter son ergonomie. Il est également possible de déplacer certaines fonctions telles que la manette des feux clignotants du bloc sous volant vers le périmètre interne du volant.

En outre, l'introduction d'équipements tels que des ordinateurs et des dispositifs multimédias dans le moyeu du volant est maintenant possible, car l'airbag nécessaire pour un volant à moyeu fixe est plus petit que les airbags classiques, libérant ainsi de l'espace. Cela s'explique par le fait que le moyeu, qui n'a généralement pas de symétrie de révolution, ne tourne plus et est donc plus facile à couvrir en cas d'accident.

Un des problèmes réside dans la connexion des fils de commande, de passer les fils à travers la colonne de direction, cela a entraîné des solutions coûteuses et souvent peu satisfaisantes, telles que des connexions glissantes ou des joints tournants, qui ont des problèmes de fiabilité et de durabilité.

De plus, les moyeux fixes actuels sont basés sur une transmission de la rotation du volant par un système d'engrenages du moyeu entrainant un rapport de rotation différent de 1 entre la rotation du volant et celle transmise à l'extrémité de la colonne de direction. De ce fait il est nécessaire de compenser au niveau du système d'engrenages et au niveau de la colonne de direction pour rétablir un rapport de rotation de 1. Ainsi, pour accueillir un moyeu fixe, la colonne de direction doit être spécifique et, en résultante, le châssis aussi (ceci notamment au travers d'un tablier spécifique).

Ainsi le montage d'un moyeu fixe sur un véhicule à moyeu tournant est difficile, voire impossible.

### Présentation de l'invention

La présente invention vise à remédier à ces inconvénients avec une approche totalement novatrice.

Plus précisément, l'invention a pour objectif de fournir un moyeu de volant fixe.

En particulier, un objectif de l'invention est de fournir un moyeu fixe permettant de s'affranchir de tout autre système de réglage complexe.

Un objectif de l'invention est de fournir un moyeu qui puisse être adaptée aisément à des systèmes existants.

Ces objectifs, ainsi que d'autres qui apparaîtront par la suite, sont atteints, selon un premier aspect, à l'aide d'un moyeu de volant fixe, le moyeu comportant :
- une platine qui, étant destinée à être fixée au volant, présente une ouverture pour recevoir une extrémité d'une colonne de direction d'un véhicule,
- un premier flasque ; et
- un deuxième flasque ;
   dans lequel la platine est agencée libre en rotation entre le premier flasque et le deuxième flasque, le moyeu étant remarquable en ce que le premier flasque et le deuxième flasque comportent respectivement une première et une deuxième gorge rectiligne, la platine comprenant un passage périphérique à l'ouverture, la platine étant destinée à être solidaire en rotation avec l'extrémité de la colonne de direction
   le moyeu comprenant en outre :
      - un élément en spirale, préférentiellement creux pour fournir un passage de câbles, qui s'étend entre une première extrémité et une deuxième extrémité, chaque extrémité comportant un ergot enclavé respectivement dans la première gorge et la deuxième gorge de telle manière à rendre le premier flasque et le deuxième flasque solidaire en rotation, l'élément en spirale étant agencé dans le passage de tel manière à former une liaison hélicoïdale entre la platine et l'élément en spirale.

Grâce à ces dispositions, le moyeu de fixe permet d'avoir :
- une réduction de la taille de l'airbag : comme le moyeu ne tourne plus, l'airbag peut être plus petit que les airbags traditionnels, ce qui libère de l'espace dans le volant.
- une possibilité d'ajouter plus d'équipements : comme le moyeu est maintenant disponible pour l'implantation d'équipements, il est possible d'ajouter davantage de fonctions, tels que des boutons, des manettes ou des dispositifs multimédias, dans le volant.
- une réduction des coûts : avec un moyeu de volant fixe selon l'invention, il est possible d'éviter des solutions coûteuses et peu fiables, telles que les connexions glissantes ou les joints tournants, nécessaires pour passer les fils à travers la colonne de direction traditionnellement tournante.
- amélioration de la fiabilité et de la durabilité : comme il n'y a plus de pièces mobiles dans le moyeu, cela réduit les risques de défaillance et d'usure prématurée, ce qui augmente la fiabilité et la durabilité de l'ensemble tout en assurant moins de vibration (donc une réduction du bruit),
- une adaptation à tout type de véhicule, et notamment ceux présentant une colonne de direction à moyeu tournant, puisque, grâce aux système à deux flasques, le rapport de rotation est de 1 entre la rotation du volant et celle transmise à l'extrémité de la colonne de direction.

L'invention est avantageusement mise en oeuvre selon les modes de réalisation et les variantes exposées ci-après, lesquelles sont à considérer individuellement ou selon toute combinaison techniquement opérante.

Dans un mode de réalisation, une pièce d'adaptation logée dans la platine fixée à cette dernière, la pièce d'adaptation comprenant une empreinte configurée pour être complémentaire en forme à l'extrémité de la colonne de direction du véhicule, la platine étant destinée à être rendue solidaire en rotation de l'extrémité de la colonne de direction par la pièce d'adaptation.

Dans un mode de réalisation, le moyeu comprend en outre un élément de support du moyeu configuré pour recevoir au moins un accessoire de volant parmi un couvercle, des éléments de commandes du véhicule, un affichage sur moyeu du véhicule et des éléments d'airbag.

Dans un mode de réalisation, le moyeu comprend en outre un système d'embrayage présentant au moins une configuration embrayée dans laquelle l'élément support est solidaire avec le premier flasque et une configuration débrayée dans laquelle l'élément support est solidaire avec la platine.

Dans un mode de réalisation, l'élément support est configuré pour recevoir des éléments de commandes du véhicules et/ou un affichage sur moyeu et dans lequel le moyeu comprend en outre des contacts tournants entre le premier flasque et l'élément support de telle manière à permettre une connexion tournante entre au moins un câble passant l'élément spirale et les éléments de commandes du véhicules et/ou l'affichage sur moyeu.

Dans un mode de réalisation, l'élément support est configuré pour recevoir des éléments de commandes du véhicules et/ou un affichage sur moyeu, et dans lequel, l'élément support est solidaire du premier flasque et présente un passage de câbles afin d'autoriser une connexion des éléments de commandes du véhicules et/ou un affichage sur moyeu à des câbles passant par l'élément spirale.

Dans un mode de réalisation, le moyeu comprend en outre des contacts tournants entre le deuxième flasque et la platine.

Dans un mode de réalisation, le premier flasque et le deuxième flasque sont en liaison pivot avec la platine et dans lequel le premier flasque et le deuxième flasque sont préférentiellement rendus solidaire en translation de la platine au moyen de respectivement un premier et un deuxième circlip.

Dans un mode de réalisation, la platine comprend une portion tubulaire délimitant l'ouverture et une extension latérale s'étendant à partir de la portion tubulaire, et dans laquelle l'extension latérale présente le passage périphérique, ledit passage périphérique s'étendant selon une spirale complémentaire à l'élément en spirale afin de permettre un coulissement de l'élément en spirale dans ledit passage périphérique.

Dans un mode de réalisation, la platine présente sur son extension latérale des éléments de fixation pour une jante de volant.

Dans un mode de réalisation, la première gorge et la deuxième gorge comporte chacune une butée configurée pour bloquer le premier flasque par rapport au deuxième flasque.

### Brève description des figures

D'autres avantages, buts et caractéristiques de la présente invention ressortent de la description qui suit faite, dans un but explicatif et nullement limitatif, en regard des dessins annexés, dans lesquels :
[Fig.1] représente une vue éclatée d'un moyeu fixe.
[Fig.2] représente une vue en coupe du moyeu fixe.
[Fig.3] représente un plan d'ensemble du moyeu fixe avec un système d'embrayage.
[Fig.4] représente une autre vue en coupe du moyeu fixe.
[Fig.5] représente une vue éclatée en perspective avec plusieurs éléments dont un volant.
[Fig.6] représente une autre vue éclatée en perspective avec plusieurs éléments dont un volant.

### Description des modes de réalisation

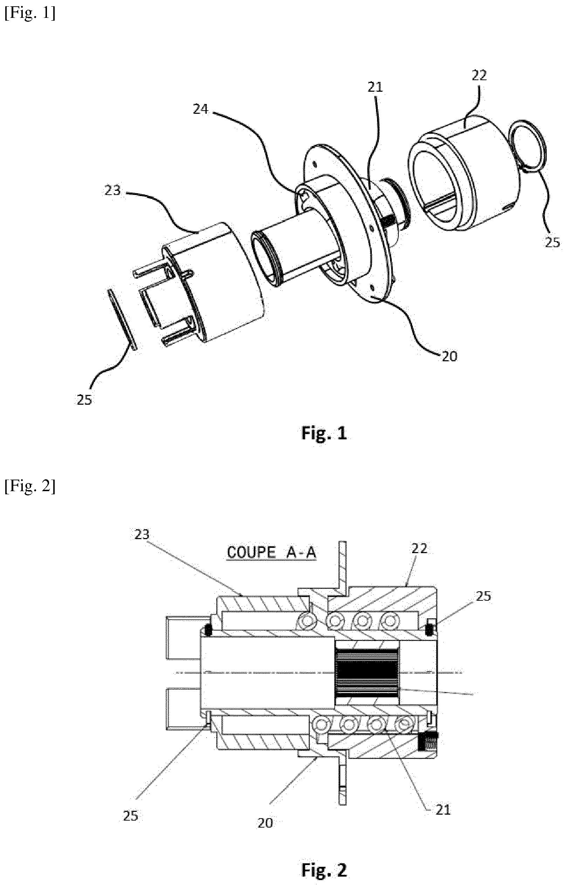

La [Fig.1] montre une vue éclatée d'un moyeu fixe.

Le moyeu est une pièce qui relie le volant d'une voiture à la colonne de direction et permet de transférer les mouvements du volant au système de direction du véhicule.

Le moyeu se compose de plusieurs pièces différentes : une platine 20, un premier flasque 22 et deuxième flasque 23, des circlips 25, un élément en spirale 21 comportant des ergots 24.

L'ensemble du moyeu vient se positionner sur l'axe de la colonne de direction.

Une colonne de direction est un composant clé dans un véhicule automobile qui relie le volant de direction au système de direction.

Selon un exemple, la platine 20 est de forme cylindrique, et comporte un trou traversant.

La platine 20 est encastrée avec un noyau cannelé. Cette liaison d'encastrement assure la liaison sur la colonne de direction.

Selon un exemple, la platine 20 est liée à l'axe tournant de la colonne de direction. Cette liaison est assurée par le noyau cannelé et un écrou de maintien.

Un noyau cannelé est un type de noyau qui présente des cannelures ou des rainures sur sa surface, généralement sous la forme de canaux ou de cannelures en forme de spirale.

Un tel noyau cannelé forme une pièce d'adaptation comprenant une empreinte configurée pour être complémentaire en forme à l'extrémité de la colonne de direction du véhicule.

La platine 20 est traversée par l'élément en spirale 21.

Selon un exemple, la platine 20 et l'élément en spirale 21 forment un ensemble qui possède une liaison hélicoïdale.

Une liaison hélicoïdale est un type de liaison mécanique utilisée pour transférer un mouvement de rotation et de translation entre deux pièces ou composants dans une machine ou un mécanisme.

Selon une variante, l'élément en spirale 21 est creux, et permet de passer des câbles électriques.

Selon une variante, l'élément en spirale 21 a une section transversale circulaire. En variante, non représentée, l'élément en spirale 21 peut avoir une section transversale carré, elliptique, octogonal ou autre.

L'ensemble platine 20 et élément en spirale 21 sont entourés par le premier flasque 22 et le deuxième flasque 23.

Chaque flasque présente une forme sensiblement cylindrique de révolution. Conformément à leur dénomination, de tels flasques sont utilisés pour fixer ou relier d'autres pièces ou composants dans un assemblage mécanique.

Selon une variante, le premier flasque 22 et le deuxième flasque 23 sont en liaison pivot avec la platine 20.

Selon un exemple, le deuxième flasque 23 est lié avec la partie fixe de la colonne de direction, telle qu'un corps de colonne de direction. Cette liaison est maintenue par un élément de fixation, tel qu'un collier de serrage.

Le corps de colonne de direction autrement dit la partie fixe de la colonne est aussi appelé couronne fixe. Le deuxième flasque 23 est fixé sur la couronne fixe de la colonne de direction. Cette fixation du deuxième flasque 23 peut se faire, comme indiqué ci-dessus, par des moyens de fixation classiquement utilisés dans l'automobile, tel que par vissage, montage en force ou encore cerclage métallique (notamment au moyen d'un collier de serrage).

Un collier de serrage est un dispositif utilisé pour fixer ou maintenir ensemble deux objets ou pièces, généralement de forme cylindrique.

Le premier flasque 22 et le deuxième flasque 23 comportent une gorge : une première gorge et une deuxième gorge.

Selon une variante, la première gorge et la deuxième gorge sont rectilignes. La première et la deuxième gorge s'étendent préférentiellement selon une direction axiale de respectivement du premier et du deuxième flasque 22, 23. Une fois montée sur le véhicule, cette direction axiale est sensiblement confondue avec une direction axiale de l'extrémité de la colonne de direction.

La première gorge et la deuxième gorge comportent une butée et coopère avec un ergot 24 respectif de l'élément en spirale 21.

Une butée est un élément mécanique utilisé pour limiter ou arrêter le mouvement d'une pièce ou d'un composant dans un système mécanique.

La butée est configurée pour bloquer la rotation du premier flasque 22 ou du deuxième flasque 23.

Les ergots 24 de l'élément en spirale 21 sont positionnés à l'intérieur des gorges.

Un ergot 24 est une protubérance sur une pièce ou un composant, souvent en forme de crochet, qui est utilisée pour la fixation, la butée, la position ou la sécurité de certaines pièces.

Les ergots 24, et leur coopération avec la première et la deuxième gorge, permettent de rendre le premier flasque 22 et le deuxième flasque 23 solidaire en rotation.

Selon une variante, lorsque la platine 20 tourne, l'élément en spirale 21 en liaison hélicoïdale avec cette dernière est bloqué en rotation sur le deuxième flasque 23.

Selon un exemple, l'ensemble platine 20 et élément en spirale 21 sont bloqués en translation par des circlips 25.

Un circlip 25, également connu sous le nom d'anneau élastique, est une pièce mécanique en forme d'anneau qui est utilisée pour retenir ou fixer une pièce sur un arbre ou dans un logement, généralement dans des applications axiales.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La [Fig.2] montre une vue en coupe du moyeu fixe lorsqu'il est assemblé.

Cette figure montre certains éléments décrit précédemment et permet de voir l'implantions de l'élément en spirale 21 autour de la platine 20.

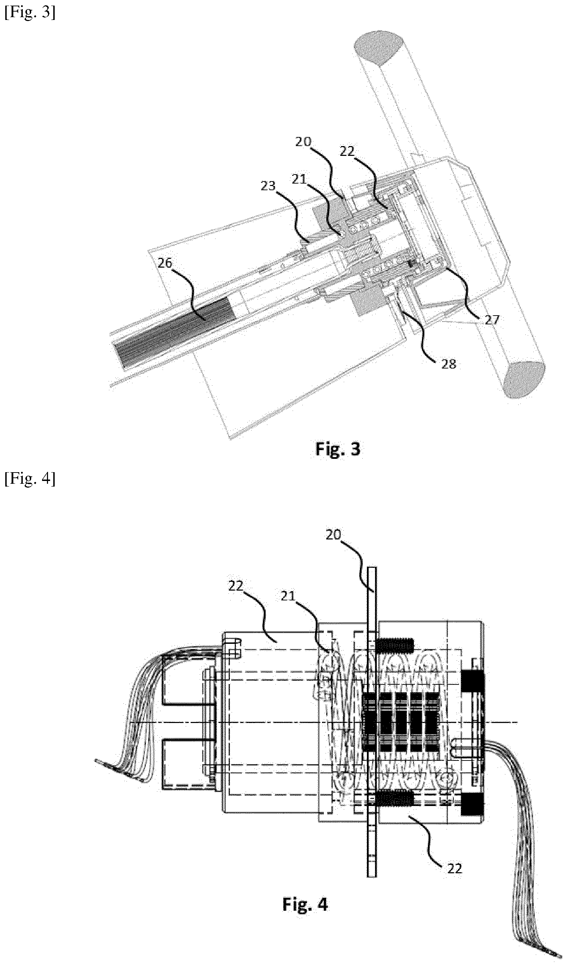

La [Fig.3] montre un plan d'ensemble du moyeu fixe.

Le plan d'ensemble représente une vue en coupe de l'intérieure de la coquille du volant.

Le moyeu comporte une fixation sur la colonne de direction avec l'utilisation d'une vis de fixation.

La platine 20 comporte une fixation avec le coussin et la jante du volant par l'intermédiaire d'une vis de fixation.

Selon un exemple, le moyeu comporte un élément de support, un système d'embrayage 27, et un contact tournant 28.

Selon une variante, l'élément de support est configuré pour recevoir un accessoire de volant parmi un couvercle, des éléments de commande du véhicule, un affichage sur moyeu du véhicule, et des éléments d'airbag.

Selon un exemple, l'élément de support reçoit des éléments de commandes du véhicule et/ou un affichage sur moyeu.

Le moyeu comprend un contact tournant 28 entre le premier flasque 22 et l'élément de support.

Un contact tournant 28 est un dispositif utilisé dans certains systèmes pour permettre la transmission de signaux électriques, de données ou d'autres signaux entre des parties mobiles et fixes d'un équipement ou d'un système.

Les contacts tournants permettent une connexion tournante avec les câbles électriques qui passent dans l'élément en spirale 21, les éléments de commandes du véhicule, et/ou l'affichage sur moyeu.

Le système d'embrayage 27 comporte deux fonctions, la première fonction est une configuration embrayée qui met en lien l'élément de support avec le premier flasque 22, et la deuxième fonction est une configuration débrayée qui met en lien l'élément de support avec la platine 20.

Dans la configuration type embrayage, le lien entre l'élément de support et le premier flasque 22 présente un passage de câbles électriques.

Un tel système d'embrayage 27, s'il est particulièrement avantageux dans le cadre de l'invention, peut également être utilisé dans le cadre d'un moyeu fixe de l'art antérieur. En effet, que ce soit le présent moyeu tournant selon l'invention, ou un moyeu tournant selon l'art antérieur, l'utilisation d'un tel système d'embrayage 27 peut permettre un passage de l'élément support d'une configuration solidaire au volant, correspondant à un fonctionnement « moyeu tournant » à une configuration solidaire du corps de colonne de direction correspondant à un fonctionnement « moyeu tournant ». Ainsi l'utilisateur peut aisément choisir la configuration apparente du moyeu en fonction de son envie ou de ses besoins.

Ce passage de câbles électriques permet d'autoriser la connexion des éléments de commandes du véhicule, et/ou de l'affichage sur moyeu à des câbles électriques qui passe par l'élément en spirale 21.

Selon un exemple, le moyeu comporte des contacts tournants entre le deuxième flasque 23 et la platine 20.

Selon une variante, la platine 20 comporte une portion tubulaire, et une extension latérale.

L'extension latérale s'étend à partir de la portion tubulaire et comprend un passage périphérique pour l'élément spirale 21.

Le passage périphérique s'étend selon une spirale complémentaire en forme à l'élément en spirale 21.

Le passage périphérique permet un coulissement de l'élément en spirale 21 dans le passage périphérique afin de fournir une liaison hélicoïdale.

La [Fig.4] montre une vue en coupe du moyeu fixe lorsqu'il est assemblé.

Cette figure montre certains éléments décrit précédemment et permet de voir les câbles électriques.

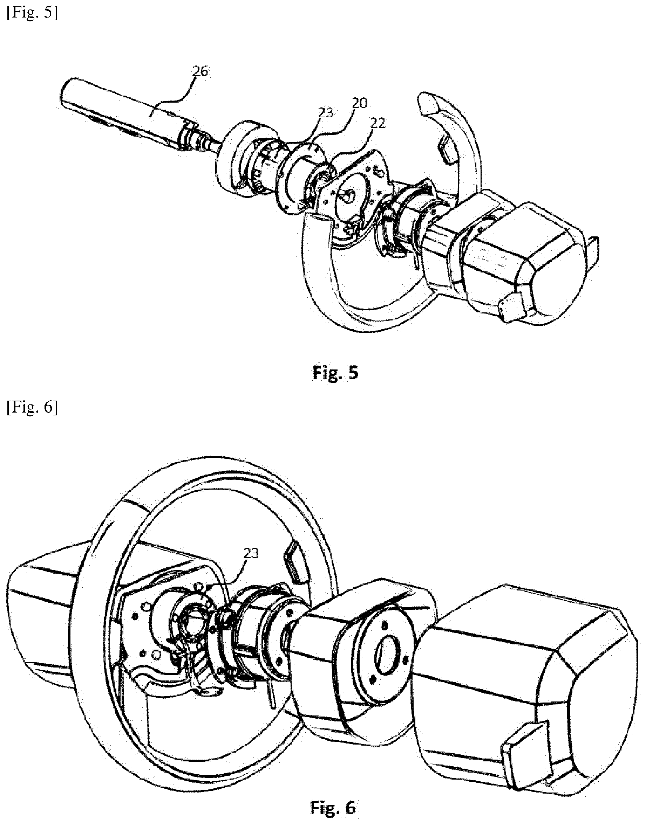

Les figures 5 et 6 montrent une vue éclatée en perspective avec plusieurs éléments dont un volant et avec la colonne de direction 26.

On retrouve l'implantation du moyeu de volant fixe avec la platine 20, le premier flasque 22, le deuxième flasque 23.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

### Liste des signes de référence

**[Tableaux1]**

| Références | Désignations |
|---|---|
| 20 | platine |
| 21 | élément en spirale |
| 22 | premier flasque |
| 23 | deuxième flasque |
| 24 | ergot |
| 25 | circlip |
| 26 | colonne de direction |
| 27 | système d'embrayage |
| 28 | contact tournant |

## Revendications

1. Moyeu de volant fixe, le moyeu comportant :
- une platine (20) qui, étant destinée à être fixée au volant, présente une ouverture pour recevoir une extrémité d'une colonne de direction (26) d'un véhicule,
- un premier flasque (22) ; et
- un deuxième flasque (23) ;
dans lequel la platine (20) est agencée libre en rotation entre le premier flasque (22) et le deuxième flasque (23), le moyeu étant **caractérisé en ce que** le premier flasque (22) et le deuxième flasque (23) comportent respectivement une première et une deuxième gorge rectiligne, la platine (20) comprenant un passage périphérique à l'ouverture,
la platine étant destinée à être solidaire en rotation avec l'extrémité de la colonne de direction,
le moyeu comprenant en outre :
- un élément en spirale (21), préférentiellement creux pour fournir un passage de câbles, qui s'étend entre une première extrémité et une deuxième extrémité, chaque extrémité comportant un ergot (24) enclavé respectivement dans la première gorge et la deuxième gorge de telle manière à rendre le premier flasque (22) et le deuxième flasque (23) solidaire en rotation, l'élément en spirale (21) étant agencé dans le passage de tel manière à former une liaison hélicoïdale entre la platine (20) et l'élément en spirale (21).

2. Moyeu selon la revendication 1 comprenant en outre une pièce d'adaptation logée dans la platine (20) fixée à cette dernière, la pièce d'adaptation comprenant une empreinte configurée pour être complémentaire en forme à l'extrémité de la colonne de direction (26) du véhicule, la platine étant destinée à être rendue solidaire en rotation de l'extrémité de la colonne de direction par la pièce d'adaptation.

3. Moyeu selon la revendication 1 ou 2 comprenant en outre un élément de support du moyeu configuré pour recevoir au moins un accessoire de volant parmi un couvercle, des éléments de commandes du véhicule, un affichage sur moyeu du véhicule et des éléments d'airbag.

4. Moyeu selon la revendication 3 comprenant en outre un système d'embrayage (27) présentant au moins une configuration embrayée dans laquelle l'élément support est solidaire avec le premier flasque (22) et une configuration débrayée dans laquelle l'élément support est solidaire avec la platine (20).

5. Moyeu selon la revendication 3 ou 4 dans lequel l'élément support est configuré pour recevoir des éléments de commandes du véhicules et/ou un affichage sur moyeu et dans lequel le moyeu comprend en outre des contacts tournants entre le premier flasque (22) et l'élément support de telle manière à permettre une connexion tournante entre au moins un câble passant l'élément spirale et les éléments de commandes du véhicules et/ou l'affichage sur moyeu.

6. Moyeu selon la revendication 3, dans lequel l'élément support est configuré pour recevoir des éléments de commandes du véhicules et/ou un affichage sur moyeu, et dans lequel, l'élément support est solidaire du premier flasque (22) et présente un passage de câbles afin d'autoriser une connexion des éléments de commandes du véhicules et/ou un affichage sur moyeu à des câbles passant par l'élément spirale.

7. Moyeu selon l'une quelconque des revendications 1 à 6 comprenant en outre des contacts tournants entre le deuxième flasque (23) et la platine (20).

8. Moyeu selon l'une quelconque des revendications 1 à 7, dans lequel le premier flasque (22) et le deuxième flasque (23) sont en liaison pivot avec la platine (20) et dans lequel le premier flasque (22) et le deuxième flasque (23) sont préférentiellement rendus solidaire en translation de la platine (20) au moyen de respectivement un premier et un deuxième circlip (25).

9. Moyeu selon l'une quelconque des revendications 1 à 8, dans laquelle la platine (20) comprend une portion tubulaire délimitant l'ouverture et une extension latérale s'étendant à partir de la portion tubulaire, et dans laquelle l'extension latérale présente le passage périphérique, ledit passage périphérique s'étendant selon une spirale complémentaire à l'élément en spirale (21) afin de permettre un coulissement de l'élément en spirale (21) dans ledit passage périphérique.

10. Moyeu selon la revendication 9, dans lequel la platine (20) présente sur son extension latérale des éléments de fixation pour une jante de volant.

11. Moyeu selon la revendication 10, dans lequel la première gorge et la deuxième gorge comporte chacune une butée configurée pour bloquer le premier flasque (22) par rapport au deuxième flasque (23).
